# EUROPÄISCHE PATENTSCHRIFT

(11) **EP 1 541 905 B1**
(45) Veröffentlichungstag und Bekanntmachung des Hinweises auf die Patenterteilung: **05.11.2008**
(21) Anmeldenummer: 04010144.6
(22) Anmeldetag: 29.04.2004
(51) Int. Cl.: F16J 15/06

(54) **Flachdichtung**
Gasket
Joint plat

(30) Priorität: 12.12.2003 DE 10358117
(43) Veröffentlichungstag der Anmeldung: 15.06.2005
(73) Patentinhaber: MAN Nutzfahrzeuge Aktiengesellschaft, 80995 München (DE)
(72) Erfinder: Vogel, Werner, 91595 Burgoberbach (DE)

(56) Entgegenhaltungen:
- DE-A1- 10 105 625

## Beschreibung

Die Erfindung bezieht sich auf eine Flachdichtung, insbesondere zur Abdichtung eines Zylinderkopfdeckels, wobei die Flachdichtung ganz oder teilweise aus einem die Dichtwirkung erzielenden elastischen Material besteht, und wenigstens einen Durchtrittsbereich für wenigstens eine Leitung aufweist, die im montierten Zustand von außerhalb des abzudichtenden Bereiches nach innerhalb des abzudichtenden Bereiches führt.

In vielen technischen Bereichen, insbesondere auch beim Motorenbau ist es notwendig, unterschiedliche Medien führende Bereiche gegeneinander abzudichten. Durch den vermehrten Einsatz elektronischer, elektrischer und elektromechanischer Komponenten tritt dabei häufig die Notwenigkeit auf, elektrische Leitungen und/oder mechanische Verbindungen, wie z.B. Rohrleitungen oder Bowdenzüge über diese Trennfuge hinweg, von dem einen Bereich in den anderen Bereich zu führen. Ein solcher Fall liegt z.B. bei der Abdichtung des Zylinderkopfes einer Brennkraftmaschine mittels eines Zylinderkopfdeckels vor.

Bei modernen Dieselmotoren mit Common Rail Kraftstoffeinspritzung werden elektrisch betätigte Einspritzventile eingesetzt, deren elektrischer Anschluß über den Zylinderkopfdeckel zugänglich ist. In solchen Fällen ist es also notwendig, die Leitungen zur Ansteuerung der Einspritzventile über die Trennfuge in den ölführenden Innenraum zu führen, wobei im Innenraum eine Fixierung der Leitungen notwendig ist, um ein Blankscheuern, Abklemmen oder Abreißen der Leitungen durch bewegliche Teile, wie z.B. Kipphebel, zu verhindern.

Zu diesem Zweck ist es bereits aus der DE 101 05 625 A1 bekannt, Leitungen in eine Dichtung zu integrieren, die aus einem Trägerelement und einem das Trägerelement umschließenden elastomeren Dichtprofil besteht. Der Mantel der integrierten Leitung wird dazu fest mit dem Dichtprofil verbunden. Um die Leitung auf beiden Seiten des Dichtprofiles zu führen, ist vorgesehen, das Trägerelement überstehen zu lassen und daran die Leitung zu befestigen.

Bei einer derartigen Anordnung ist nachteilig, dass, durch die Integration der Leitung in die Dichtung, bei geänderten elektrischen Verhältnissen oder geänderten Verhältnissen in der Anschlussgeometrie, die komplette Dichtung nicht mehr verwendbar ist. Weiterhin ist insbesondere nachteilig, dass die starren Überstände des Trägerelementes nicht geeignet sind, komplizierte Leitungsführungen zu realisieren, insbesondere dann, wenn die Leitungsführung die Ebene der Dichtung verlässt, es muss dann wieder auf konventionelle Befestigungsmethoden, wie z.B. Schraubklemmen zurückgegriffen werden.

Der Erfindung liegt zur Überwindung der durch den Stand der Technik gegebenen Nachteile die Aufgabe zugrunde, eine Flachdichtung mit wenigstens einem Durchführungsbereich für wenigstens eine Leitung so auszubilden, dass für die Leitungsführung notwendige Bauteile in die Flachdichtung integriert sind und sich die Flachdichtung, trotz komplizierter zumindest teilweise außerhalb der Dichtebene liegender Leitungsführung, als im wesentlichen flaches Bauteil fertigen lässt.

Gelöst wird die Abgabe durch die kennzeichnenden Merkmale des Patentanspruches 1.

Vorteilhafte Weiterbildungen sind in den Unteransprüchen 2 bis 6 gekennzeichnet.

Eine erfinderische Verwendung der Flachdichtung zur Abdichtung eines Zylinderkopfdeckels ist in Anspruch 7 und eine Weiterbildung dazu in Anspruch 8 gekennzeichnet.

Der Vorteil der erfindungsgemäßen Anordnung besteht insbesondere darin, dass durch die elastische Verformbarkeit der die Leitungsführungs- und/oder Leitungsbefestigungselemente tragenden angeformten Zunge, die Flachdichtung einerseits als im wesentlichen flaches Bauteil gefertigt wird, wodurch das Lager- und Transportvolumen auf einem Minimum gehalten werden kann und andererseits die Leitungsführung bei der Montage ohne großen Aufwand in die gewünschte Form bringbar ist.

Weitere Vorteile ergeben sich aus der nachfolgenden Beschreibung eines Ausführungsbeispieles der Flachdichtung, sowie der beschriebenen Verwendung der Flachdichtung zur Abdichtung eines Zylinderkopfdeckels, unter Zuhilfenahme der Zeichnungen. Es zeigen:
- Fig. 1: eine Flachdichtung in perspektivischer Darstellung
- Fig. 2: eine zur Abdichtung auf einen Zylinderkopf aufgelegte Flachdichtung in perspektivischer Darstellung

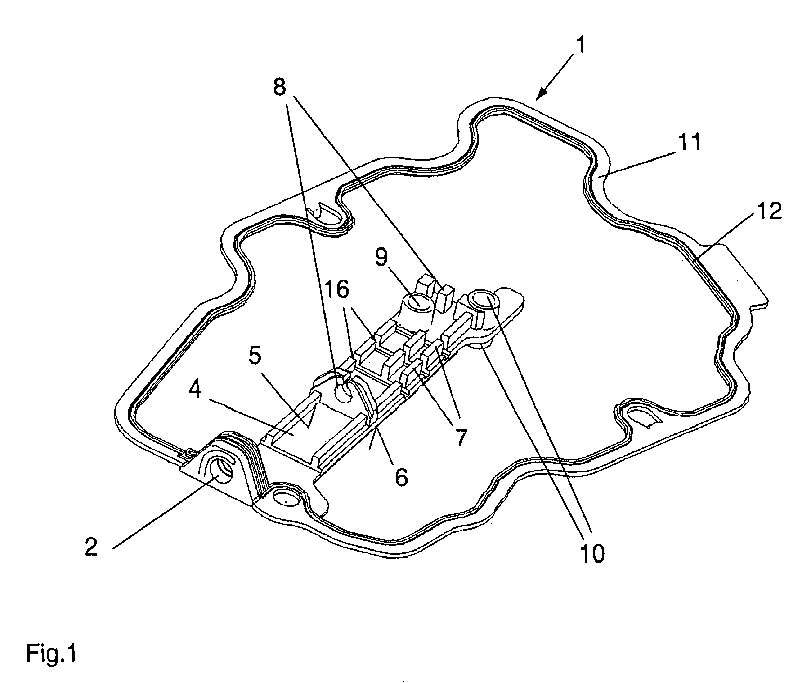

Die in Fig. 1 gezeigte Flachdichtung 1 weist einen der Dichtkontur folgenden Metallträger 11 auf, an den ein Elastomer-Dichtprofil 12 auf der dem abzudichtenden Bereich zugewandten Seite angeordnet ist. An dem Metallträger 11 ist weiterhin ein Durchtrittsbereich 2 angeordnet, der ebenfalls vom Elastomer-Dichtprofil 12 umfasst wird. Unmittelbar an den Durchtrittsbereich 2 schließt sich auf der dem abzudichtenden Bereich zugewandten Seite der Flachdichtung 1 eine in den abzudichtenden Bereich hinein sich erstreckende Zunge 4 an, die im gezeigten Beispiel einstückig mit dem Elastomer-Dichtprofil 12 ausgeführt ist.

An einer ersten Flachseite 5 der Zunge 4 sind Führungsstege 7 und Klemmstege 8 angeordnet, die einstückig mit der Zunge 4 ausgeführt sind, aber natürlich auch an dieser befestigt sein könnten.

Die Zunge 4 ist, wie bereits ausgeführt, einstückig mit dem Elastomer-Dichtprofil 12 ausgebildet, weist also, wie jedes elastomere Bauteil, eine hohe Flexibilität und Verformbarkeit auf, die noch dadurch unterstützt werden kann, dass die Zunge 4, quer zur vorgesehenen Leitungsführungsrichtung, Nuten 16 aufweist, die eine noch bessere Verformung erlauben.

An der Zunge 4 sind weiter zylinderförmige Befestigungszapfen 9, 10 vorgesehen, die im montierten Zustand der Flachdichtung 1 als Befestigungspunkte dienen. Die zylinderförmigen Befestigungszapfen 9, 10 sind sowohl auf der ersten Flachseite 5 als auch auf der zweiten Flachseite 6 der Zunge koaxial fluchtend ausgebildet, wobei die auf der zweiten Flachseite 6 liegenden Teile die Funktion von Lagerbolzen übernehmen und über auf der ersten Flachseite 5 vorgesehene Schrauben ( nicht dargestellt ) fixierbar sind.

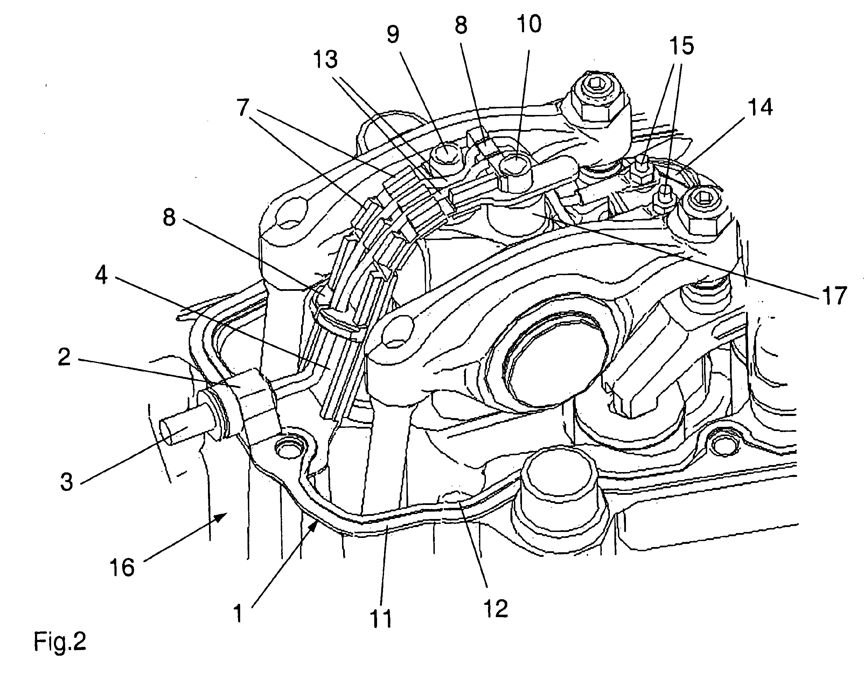

Eine vorteilhafte Verwendung der erfindungsgemäßen Flachdichtung zur Abdichtung eines Zylinderkopfdeckels ist in Fig. 2 gezeigt.

Eine Flachdichtung der in Verbindung mit Fig. 1 beschriebenen Art liegt auf dem Rand der abzudichtenden Öffnung eines Zylinderkopfes 16 auf. Die im Durchtrittsbereich 2 an das Elastomer-Dichtprofil 12 angeformte Zunge 4 ist aus der Dichtebene heraus nach oben abgebogen und mit den Befestigungszapfen 9, 10 an entsprechenden zylinderkopfseitigen Lagerpunkten 17 befestigt. Durch die Durchführung 2 führt eine Leitung 3 in das Innere des abzudichtenden Bereiches wo zwei in der Leitung 3 enthaltene einzeln ummantelte Leiter 13 in den Klemmstegen 8 der Zunge 4 gehalten und zwischen den Klemmstegen 8 mittels Führungsstegen 7 geführt sind. Die Leiter 13 sind vom Ende der Zunge 4 zu einem Kraftstoffeinspritzventil 14 geführt und an dessen Anschlussklemmen 15 angeschlossen.

Wie aus der Fig. 2 ersichtlich, sind die Leiter 13 im Bereich der im Zylinderkopf angeordneten beweglichen Teile sicher geführt, so dass eine Beschädigung der Leiter 13 durch Blankscheuem, Abklemmen oder Abreißen sicher verhindert werden kann.

Selbstverständlich ist es mit der erfindungsgemäßen Flachdichtung dem Fachmann möglich, noch weitaus kompliziertere Leitungsführungen zu realisieren.

Wie bereits eingangs dargestellt, muss es sich bei den mittels der erfindungsgemäßen Flachdichtung geführten Leitungen nicht unbedingt um elektrische Leitungen handeln, es können natürlich auch andere Arten von Leitungen fixiert und geführt werden, beispielsweise Leitungen zum Transport von Fluiden oder Gasen, also Rohr- oder Schlauchleitungen, oder Leitungen zur Kraftübertragung wie Hydraulik- oder Pneumatikleitungen oder Bowdenzüge

Ausgehend von der beschriebenen Ausführung der Flachdichtung sind dem Fachmann unter Anwendung allgemeiner Konstruktionsprinzipien vielfältige Variationen möglich, so dass dieser nur Beispielcharakter zukommt.

## Patentansprüche

1. Flachdichtung, insbesondere zur Abdichtung eines Zylinderkopfdeckels, ganz oder teilweise bestehend aus einem die Dichtwirkung erzielenden elastischen Material, wobei die Dichtung (1) wenigstens einen Durchtrittsbereich (2) für wenigstens eine Leitung (3) aufweist, die im montierten Zustand von außerhalb des abzudichtenden Bereiches nach innerhalb des abzudichtenden Bereiches führt und wobei unmittelbar an den Durchtrittsbereich (2) anschließend, sich in den abzudichtenden Bereich hinein erstreckend, eine angeformte, zumindest senkrecht zur Dichtungsebene verformbare Zunge (4) erstreckt, die auf wenigstens einer ihrer Flachseiten (5, 6) wenigstens ein Leitungsführungs- und/ oder Leitungsbefestigungselement (7, 8) trägt, wobei die Flachdichtung aus einen flachen Metallträger (11) besteht, an dem ein umlaufendes Elastomer-Dichtprofil (12) auf der dem abzudichtenden Raum zugewandten Seite angeordnet ist, **dadurch gekennzeichnet, dass** das Elastomer-Dichtprofil (12) auch den Durchtrittsbereich für die wenigstens eine Leitung (3) umfasst und einstückig mit der aus dem gleichen Material bestehenden verformbaren Zunge (4) ausgeführt ist.

2. Flachdichtung nach Anspruch 1, **dadurch gekennzeichnet, dass** an der Zunge (4) wenigstens ein Befestigungselement (9, 10) angeordnet ist, das der Befestigung der Zunge (4) im abzudichtenden Raum dient.

3. Flachdichtung, nach einem der vorhergehenden Ansprüche, **dadurch gekennzeichnet, dass** das wenigstens eine Leitungsführungs- und/oder Leitungsbefestigungselement (7, 8) ein Klemmsteg (8) und/oder ein Führungssteg (7) ist, der auf wenigstens einer Flachseite (5, 6) der Zunge (4) quer zur Leitungsfiihrungsrichtung angeformt ist.

4. Flachdichtung nach einem der Ansprüche 1 oder 2, **dadurch gekennzeichnet, dass** das wenigstens eine Leitungsführungs- und/oder Leitungsbefestigungselement (7, 8) ein Klemmsteg (8) und/oder Führungssteg (7) ist, der auf wenigstens einer Flachseite (5, 6) der Zunge (4) quer zur Leitungsführungsrichtung befestigt ist.

5. Flachdichtung nach einem der Ansprüche 1 bis 3, **dadurch gekennzeichnet, dass** die Flachdichtung der Durchtrittsbereich (2), die verformbare Zunge (4), das wenigstens eine Befestigungselemente (9, 10), das wenigstens eine Leitungsführungs- und/oder Leitungsbefestigungselement (7, 8) einstückig aus weichelastischem Material hergestellt sind.

6. Flachdichtung nach Anspruch 5, **dadurch gekennzeichnet, dass** das weichelastische Material ein Elastomer ist.

7. Verwendung einer Flachdichtung nach einem der vorhergehenden Ansprüche zur Abdichtung eines Zylinderkopfdeckels, **dadurch gekennzeichnet, dass**
- die Flachdichtung mit ihrem die Dichtwirkung erzielenden Teil auf den Rand der abzudichtenden Öffnung des Zylinderkopfes aufgelegt ist,
- die durch den Durchtrittsbereich (2) führende Leitung (3) eine ummantelte elektrische Leitung ist, die wenigstens zwei jeweils ummantelte elektrische Leiter (13) beinhaltet,
- die elektrischen Leiter (13) mit Hilfe der an der Zunge (4) angeordneten Leitungsführungs- und/oder Leitungsbefestigungselemente (7, 8) geführt und/oder befestigt sind, wobei die Zunge (4) derart verformt ist, dass die Leiter (13) aus der Dichtebene heraus bis an die Anschlussklemmen (15) wenigstens eines im abzudichtenden Bereich liegenden elektrischen Verbrauchers (14) herangeführt sind,
- die elektrischen Leiter (13) an wenigstens einen im abzudichtenden Bereich angeordneten elektrischen Verbraucher (14) angeschlossen sind,
- der abzudichtende Bereich durch Aufsetzen eines Deckels auf den die Dichtwirkung erzielenden Teil der Flachdichtung und Verspannen des Deckels mit dem Zylinderkopf verschlossen ist.

8. Verwendung einer Flachdichtung zur Abdichtung eines Zylinderkopfdeckels nach Anspruch 12, **dadurch gekennzeichnet, dass** der wenigstens eine elektrischen Verbraucher (14) ein elektrisch betätigtes Kraftstoffeinspritzventil ist.

## Claims

1. A gasket, in particular for sealing a cylinder-head cover, totally or partially consisting of a resilient material achieving the sealing effect, wherein the seal (1) has at least one passage region (2) for at least one line (2) which in the assembled state runs from outside of the region to be sealed to within the region to be sealed and wherein directly adjacent to the passage region (2) and extending into the region to the sealed there extends an integrally moulded tongue (4) deformable at least perpendicularly to the sealing plane, which tongue bears at least one line guiding and/or line securing element (7, 8) on at least one of its flat sides (5, 6), wherein the gasket is composed of a flat metal support (11) on which on the side facing the space to be sealed there is arranged a circumferential elastomer sealing profile (12), **characterised in that** the elastomer sealing profile (12) also comprises the passage region for the at least one line (3) and is integral with the deformable tongue (4) of the same material.

2. A gasket according to claim 1, **characterised in that** at least one securing element (9, 10) is arranged on the tongue (4) and serves to secure the tongue (4) in the space to be sealed.

3. A gasket according to any one of the preceding claims, **characterised in that** the at least one line guiding and/or line securing element (7, 8) is a clamping elongated member (8) and/or a guiding elongated member (7), which, on at least one flat side (5, 6) of the tongue (4), is integrally moulded transversely to the line guiding direction.

4. A gasket according to one of claims 1 and 2, **characterised in that** the at least one line guiding and/or line securing element (7, 8) is a clamping elongated member (8) and/or guiding elongated member (7), which, on at least one flat side (5, 6) of the tongue (4), is secured transversely to the line guiding direction.

5. A gasket according to any one of claims 1 to 3, **characterised in that** the gasket, the passage region (2), the deformable tongue (4), the at least one securing element (9, 10), the at least one line guiding and/or line securing element (7, 8) are manufactured in one piece from a softly elastic material.

6. A gasket according to claim 5, **characterised in that** the softly elastic material is an elastomer.

7. Use of a gasket according to any one of the preceding claims for sealing a cylinder-head cover, **characterised in that**
- the gasket is placed by means of its part achieving the sealing effect on the edge of cylinder-head opening to be sealed,
- the line (3) running through the passage region (2) is a sheathed electric line comprising at least two electrical conductors (13) each sheathed,
- the electrical conductors (13) are guided and/or secured with the aid of the line guiding and/or line securing elements (7, 8) arranged on the tongue (4), wherein the tongue (4) is deformed in such a manner that the conductors (13) are brought out of the sealing plane up to the connecting terminals (15) of at least one electric consumer (14) located in the region to be sealed,
- the electrical conductors (13) are connected to at least one electric consumer (14) arranged in the region to be sealed,
- the region to be sealed is closed by the placing of a cover onto the gasket part achieving the sealing effect and by the clamping of the cover to the cylinder head.

8. Use of a gasket for sealing a cylinder-head cover according to claim 12, **characterised in that** the at least one electric consumer (14) is an electrically actuated fuel injection valve.

## Revendications

1. Joint plat notamment pour réaliser l'étanchéité d'un chapeau de culasse, composé totalement ou partiellement d'une matière élastique réalisant l'étanchéité,
le joint (1) ayant au moins une zone de passage (2) pour au moins une conduite (3) qui à l'état installé va de l'extérieur de la zone à rendre étanche vers l'intérieur de cette zone, et
une languette déformable (4) directement adjacente à la zone de passage (2), cette languette s'étendant à l'intérieur de la zone à rendre étanche et cette languette formée sur celle-ci, étant au moins déformable perpendiculairement au plan d'étanchéité, cette languette portant sur au moins l'un de ses côtés plats (5, 6), au moins un élément de guidage et/ou de fixation de conduite (7, 8),
le joint plat étant formé d'un support métallique plat (11) muni d'un profil d'étanchéité en élastomère (12), périphérique, sur le côté tourné vers le volume à rendre étanche,
**caractérisé en ce que**
le profil d'étanchéité en élastomère (12) entoure également la zone de passage d'au moins une conduite (3) et est réalisé en une seule pièce avec la languette déformable (4) réalisée dans la même matière.

2. Joint plat selon la revendication 1,
**caractérisé en ce que**
la languette (4) comporte au moins un élément de fixation (9, 10) servant à fixer la languette (4) dans le volume à rendre étanche.

3. Joint plat selon les revendications précédentes,
**caractérisé en ce qu'**
au moins un élément de guidage de conduite et/ou de fixation de conduite (7, 8) est une nervure de pincement (8) et/ou une nervure de guidage (7) formées sur au moins un côté plat (5, 6) de la languette (4) transversalement à la direction de passage de la conduite.

4. Joint plat selon la revendication 1 ou 2,
**caractérisé en ce qu'**
au moins un élément de guidage de conduite et/ou de fixation de conduite (7, 8) est une nervure de pincement (8) et/ou une nervure de guidage (7) fixées sur au moins un côté plat (5, 6) de la languette (4) transversalement à la direction de guidage de la languette.

5. Joint plat selon les revendications 1 à 3,
**caractérisé en ce que**
le joint plat de la zone de passage (2), la languette déformable (4), au moins un élément de fixation (9, 10), au moins un élément de guidage de conduite et/ ou un élément de fixation de conduite (7, 8) sont réalisés en une matière élastique molle.

6. Joint plat selon la revendication 5,
**caractérisé en ce que**
la matière élastique molle est un élastomère.

7. Utilisation d'un joint plat selon les revendications précédentes, pour réaliser l'étanchéité d'un chapeau de culasse,
**caractérisée en ce qu'**
- on place le joint plat avec sa partie assurant l'effet d'étanchéité sur le bord de l'ouverture de la culasse à rendre étanche,
- la conduite (3) passant dans la zone de passage (2) est un câble électrique gainé ayant au moins deux conducteurs électriques (13) chacun étant gainé,
- les conducteurs électriques (13) sont guidés et/ou tenus à l'aide des éléments de guidage de conduite et/ou de fixation de conduite (7, 8) portés par la languette (4), la languette (4) étant déformable de façon que les conducteurs (13) sortent du plan d'étanchéité jusqu'au niveau des bornes de raccordement (15) d'au moins un utilisateur électrique (14) situé dans la zone à rendre étanche,
- les conducteurs électriques (13) sont raccordés à au moins un consommateur électrique (14) installé dans la zone à rendre étanche,
- on ferme la zone à rendre étanche en mettant en place un chapeau sur la partie assurant l'effet d'étanchéité du joint plat et on serre le chapeau à la culasse.

8. Utilisation d'un joint plat pour réaliser l'étanchéité d'un chapeau de culasse selon la revendication 12,
**caractérisée en ce qu'**
au moins un utilisateur électrique (14) est un injecteur de carburant à commande électrique.
